# FASCICULE DE BREVET EUROPEEN

(11) **EP 2 259 901 B1**
(45) Date de publication et mention de la délivrance du brevet: **26.10.2011**
(21) Numéro de dépôt: 09722443.0
(22) Date de dépôt: 13.02.2009
(51) Int. Cl.: B25B 31/00, F16B 19/10

(54) **DISPOSITIF DE FIXATION PROVISOIRE ET REUTILISABLE DESTINE AU PRE-ASSEMBLAGE D'AU MOINS DEUX ELEMENTS STRUCTURAUX PREALABLEMENT PERCES**
WIEDERVERWENDBARE VORÜBERGEHENDE BEFESTIGUNGSVORRICHTUNG ZUR VORMONTAGE VON MINDESTENS ZWEI VORAB DURCHLOCHTEN BAUTEILEN
REUSABLE TEMPORARY FASTENING DEVICE FOR PREASSEMBLING AT LEAST TWO PREVIOUSLY PERFORATED STRUCTURAL MEMBERS

(30) Priorité: 19.02.2008 FR 0851043
(43) Date de publication de la demande: 15.12.2010
(73) Titulaire: Lisi Aerospace, 95310 Saint Ouen L'aumone (FR)
(72) Inventeur: LUNEAU, Etienne, 36100 Sergy (FR); BELLAVIA, Bastien, 18120 Mereau (FR); PROT, Philippe, 18500 Vignoux sur Barangeon (FR)
(74) Mandataire: Lotaut, Yacine Diaw
(86) Numéro de dépôt international: PCT/FR2009/000194
(87) Numéro de publication internationale: WO 2009/115691

(56) Documents cités:
- DE-U1-202006 012 668
- US-A- 4 936 726

## Description

La présente invention concerne un dispositif de fixation provisoire et réutilisable destiné au pré-assemblage d'au moins deux éléments structuraux préalablement percés, en accédant par une seule face de la structure, décrit dans le preambule de la revendication 1. Un tel dispositif est connu par example du document DE 202006 012 660 U1.

Des dispositifs de fixation provisoire, désignés le plus souvent sous le terme d'agrafes d'épinglage, sont utilisés couramment en construction mécanique et notamment en construction aéronautique, pour le pré-assemblage des éléments structuraux constitutifs d'un aéronef, tels que des panneaux de fuselage ou de voilure, assemblés sur des cadres, lisses, raidisseurs, nervures et longerons.

Les dispositifs connus dans l'art antérieur comprennent généralement un corps cylindrique creux qui vient prendre appui sur une première face des éléments structuraux à assembler, à l'intérieur duquel vient coulisser un ensemble tige/pinces, lui-même constitué d'une tige filetée à une première extrémité de laquelle sont serties deux demi-pinces dotées de becquets rétractables venant prendre appui sur la seconde face opposée des éléments structuraux à assembler. Un écrou est engagé sur la seconde extrémité filetée de la tige et vient prendre appui sur la face postérieure du corps creux.

L'écrou est alors entraîné en rotation sur la tige filetée au moyen d'un outil de pose du type visseuse, ce qui provoque la rétraction de l'ensemble tige/pinces jusqu'à ce que les becquets viennent prendre appui sur la face opposée des éléments structuraux à assembler, pour les accoster fermement sous un effort de précharge déterminé.

A l'issue des opérations de pré-assemblage, ces dispositifs peuvent être déposés en dévissant l'écrou pour repousser en sens inverse l'ensemble tige/pinces et permettre la rétraction radiale des becquets afin de pouvoir extraire le dispositif du trou percé dans les éléments structuraux.

De tels dispositifs de fixation provisoire sont décrits par exemple dans les brevets FR 2 513 708 ou EP 336 808.

Ces dispositifs sont couramment utilisés pour le pré-assemblage d'éléments structuraux métalliques, notamment en alliage d'aluminium dont la résistance mécanique peut supporter sans dommages majeurs la forte pression locale de contact exercée par les becquets sur les faibles surfaces d'appui inhérentes au concept des pinces rétractables.

Sur les aéronefs modernes, de plus en plus d'éléments structuraux métalliques sont remplacés par des matériaux composites renforcés par des fibres telles que les fibres de verre ou de carbone. La structure multicouches des ces matériaux les rend sensibles au délaminage entre couches. Cette forme d'endommagement, qui peut dégrader très significativement la résistance mécanique de tels matériaux, est fréquente au bord d'un trou percé dans le composite, notamment sous l'effet de la forte pression locale de contact et des arêtes vives des becquets des agrafes de l'art antérieur décrites précédemment.

Un but de la présente invention est donc de résoudre le problème cité précédemment à l'aide d'une solution fiable, de conception simple.

Ainsi, Le nouveau concept d'agrafe d'épinglage pour matériaux composites exposé ci-après a précisément pour objectif et pour avantage de réduire à minima la pression locale de contact en augmentant considérablement la surface d'appui et en éliminant les arêtes vives à effet contondant, tout en conservant les avantages que constituent l'accès par une seule face de l'assemblage, une précharge installée élevée, ainsi que son caractère démontable et réutilisable, particulièrement important.

En particulier, la présente invention a pour objet un dispositif de fixation provisoire et réutilisable, tel qu'une agrafe d'épinglage, destiné au pré-assemblage d'au moins deux éléments structuraux préalablement munis de perçages coaxiaux pour recevoir ledit dispositif, comprenant :
- un corps cylindrique creux s'étendant selon un axe d'allongement,
- une bague d'appui disposée à une extrémité proximale du corps creux et contre laquelle un des éléments structuraux est destiné à reposer en position de fixation du dispositif,
- une tige filetée de traction traversant le corps creux coaxialement à celui-ci et destinée à être introduite dans les perçages coaxiaux respectifs des éléments structuraux à fixer,
- des moyens de serrage reliés à la tige filetée de traction et destinés à maintenir les éléments structuraux l'un contre l'autre, les moyens de serrage comprenant au moins un embout tubulaire amovible adapté pour être monté sur une extrémité fileté proximale de la tige de traction et pouvant être compacté localement axialement sous l'effet d'une force exercée sur ladite tige de traction de manière à former un bourrelet radial destiné à prendre les élément structuraux en sandwich entre ce dernier et la bague d'appui,
   **caractérisé en ce que**
- il comporte un fourreau présentant un rebord d'appui sur lequel repose l'embout tubulaire, et permettant la formation du bourrelet radial à distance des éléments structuraux.

Ainsi, l'embout déformable qui s'évase en forme de bulbe pendant l'installation sur la structure forme une surface d'appui importante permettant de réduire les pressions locales de contact sur le matériau composite, en évitant toute formation d'arête vive susceptible d'endommager ce dernier. Cet embout est aisément séparable après installation de manière à pouvoir facilement déposer l'agrafe. Cet embout est consommable et peut ensuite être remplacé pour pouvoir réutiliser l'agrafe à moindre coût

Selon des modes de réalisation préférés, le dispositif selon la présente invention peut comprendre en outre l'une au moins des caractéristiques suivantes :
- l'embout tubulaire est pourvu localement d'une zone affaiblie mécaniquement destinée à former le bourrelet sous l'effet de la force de traction axiale exercée sur la tige ;
- la zone affaiblie mécaniquement est définie par une réduction d'épaisseur de l'embout tubulaire adaptée pour se déformer radialement vers l'extérieur, à une distance déterminée de la bague d'appui supérieure à l'épaisseur des éléments structuraux à assembler, pour former le bourrelet par épanouissement ;
- le fourreau est cylindrique et vissé sur l'extrémité proximale de la tige de traction ;
- le fourreau présente un perçage interne axial de forme polygonale, par exemple hexagonale, adapté pour coopérer étroitement avec une forme polygonale correspondante ménagée sur une portion distale externe de l'embout tubulaire de manière à bloquer ce dernier en rotation par rapport audit fourreau ;
- le fourreau présente un diamètre externe sensiblement égal au diamètre externe de l'embout tubulaire ;
- le fourreau présente, sur la majeure partie de sa longueur, un diamètre externe adapté pour coulisser avec un jeu minimal à l'intérieur d'un orifice circulaire ménagé dans la bague d'appui ;
- le fourreau est pourvu, d'un épaulement destiné à venir prendre appui sur la face interne d'extrémité de la bague, ledit épaulement étant lui-même percé de plusieurs orifices radiaux permettant de loger un système de blocage en translation du fourreau par rapport à la tige de traction ;
- le système de blocage en translation comporte des billes coopérant avec une gorge annulaire réalisée dans la tige filetée et ayant un diamètre égal au diamètre externe du fourreau minoré d'environ une fois le diamètre des billes de sorte que les billes peuvent se rétracter dans la gorge sans dépasser dudit diamètre ;
- en alternative, le système de blocage en translation est constitué par une bague fendue solidaire du fourreau et comportant plusieurs segments séparés par des fentes de manière à former des languettes radialement élastiques dont les extrémités présentent des excroissances radiales de forme pseudo torique pouvant s'escamoter dans la rainure circulaire ;
- la gorge annulaire présente, sur son bord distal, un chanfrein conique destiné à guider le mouvement radial des billes ou des extrémités de la bague fendue lors de leur entrée/sortie de ladite gorge sous l'effet du déplacement axial de la tige de traction ;
- l'embout tubulaire présente une extrémité proximale fermée et un filetage intérieur destiné à coopérer avec un filetage extérieur réalisé au niveau de l'extrémité proximale de la tige de traction ;
- l'embout tubulaire présente à son extrémité ouverte, un chanfrein extérieur destiné à coopérer avec un chanfrein conique correspondant ménagé à l'extrémité proximale du fourreau ;
- le dispositif comporte en outre un entraîneur de vissage monté à l'extrémité distale de la tige de traction pour faire coulisser celle-ci axialement, en particulier lors de la formation du bourrelet radial ;
- l'entraîneur est constitué par une pièce cylindrique creuse percée de part en part d'un orifice axial doté, à une extrémité proximale, d'un filetage intérieur destiné à coopérer avec un filetage extérieur de la tige de traction ;
- l'orifice axial de l'entraîneur comporte également un épaulement interne de diamètre supérieur au diamètre du filetage de manière à servir de surface d'appui à une vis d'arrêt fixée dans un orifice interne fileté ménagé au niveau de l'extrémité distale de la tige de traction ;
- l'orifice axial de l'entraîneur forme, au niveau de son extrémité distale, un alésage cylindrique de diamètre intérieur supérieur au diamètre du filetage intérieur de sorte que la vis de blocage peut être introduite par ce logement ;
- le corps creux présente, au niveau de son extrémité proximale, un filetage externe coopérant avec un filetage interne de la bague d'appui ;
- le corps creux comporte, proche de son extrémité proximale, un cambrage interne à fond rayonné ;
- le corps creux comporte, proche de son extrémité proximale, un chambrage interne cylindrique à fond plat et apte à recevoir une bague d'usure amovible et interchangeable à fond rayonné ;
- le dispositif comporte des moyens d'étanchéité portés par la bague d'appui, par exemple un joint torique logé dans une gorge annulaire interne ;
- le dispositif comporte, à l'intérieur du corps creux, un organe compressible assurant la fonction de ressort de compression ;
- l'organe compressible est constituée par plusieurs rondelles élastiques coaxiales, par exemple des rondelles Belleville, destinées à se comprimer sous l'effet d'une précharge axiale induite lors de la phase d'installation du dispositif sur les éléments structuraux à assembler ; et
- les rondelles élastiques prennent appui contre un épaulement interne du corps creux d'une part et l'extrémité proximale de l'entraîneur d'autre part ;

L'invention se rapporte également à un procédé de fixation provisoire destiné au pré-assemblage d'au moins deux éléments structuraux préalablement munis de perçages coaxiaux et mettant en oeuvre un dispositif selon l'une quelconque des revendications précédentes, **caractérisé en ce qu'**il comporte des étapes consiste à
- réaliser des moyens de serrage des éléments structuraux sous la forme d'un bourrelet radial, à distance desdits éléments, notamment des perçages,
- puis emmener le bourrelet au contact desdits éléments.

De manière préférée, le bourrelet est réalisé sur un embout tubulaire adapté pour être monté de manière amovible sur une tige de traction du dispositif et pourvu d'une zone affaiblie mécaniquement se déformant radialement par épanouissement pour former ledit bourrelet

L'invention va maintenant être décrite plus en détail en référence à des modes de réalisation particuliers donnés à titre d'illustration uniquement et représentés sur les figures annexées dans lesquelles :
- la figure 1 est une vue en coupe d'un dispositif de fixation provisoire de la présente invention dans son état initial avec un embout ;
- la figure 2 est une vue en coupe du dispositif monté au travers d'éléments structuraux à assembler ;
- la figure 3 est une vue en coupe du dispositif illustrant une première étape de formation d'un bourrelet de serrage sur l'embout ;
- la figure 4 est une vue en coupe du dispositif illustrant une deuxième étape de serrage des éléments structuraux à l'aide dudit bourrelet ;
- la figure 5 est une vue en coupe du dispositif illustrant une troisième étape de libération des éléments structuraux par recul du bourrelet ;
- la figure 6 est une vue en coupe du dispositif illustrant une quatrième étape d'éjection de l'embout ;
- la figure 7 est une vue en coupe agrandie d'un détail proximal du dispositif de la présente invention ;
- la figure 8 est une vue en coupe agrandie d'un détail distal du dispositif de la présente invention ;
- la figure 9 est une vue en perspective d'une variante de réalisation d'un des éléments du dispositif de la présente invention ;
- la figure 10 est une vue de côté de l'élément de la figure 9 ; et
- la figure 11 est une vue en coupe longitudinale de l'élément de la figure 10.

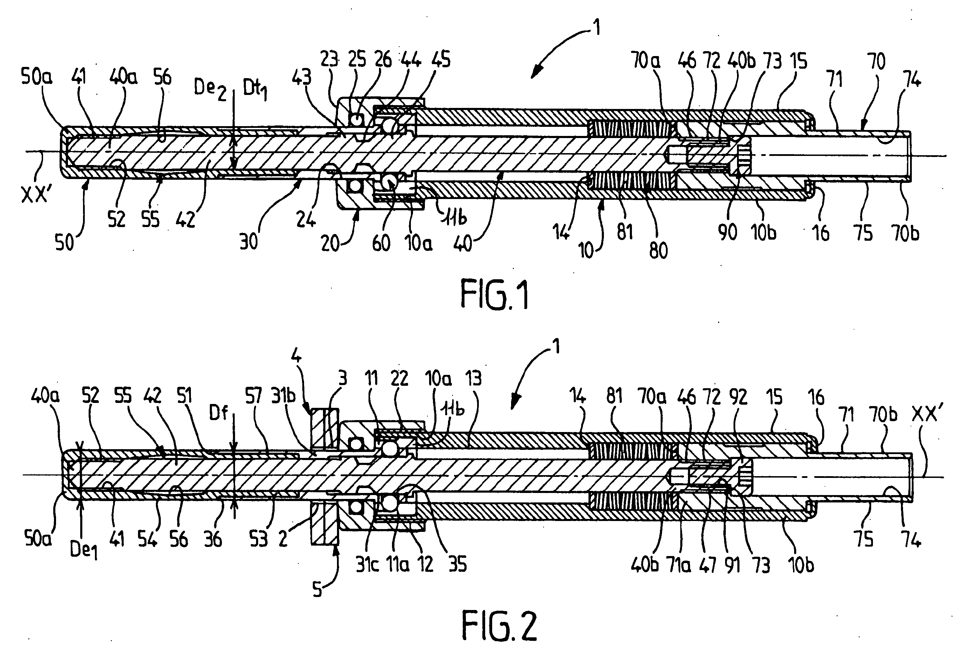

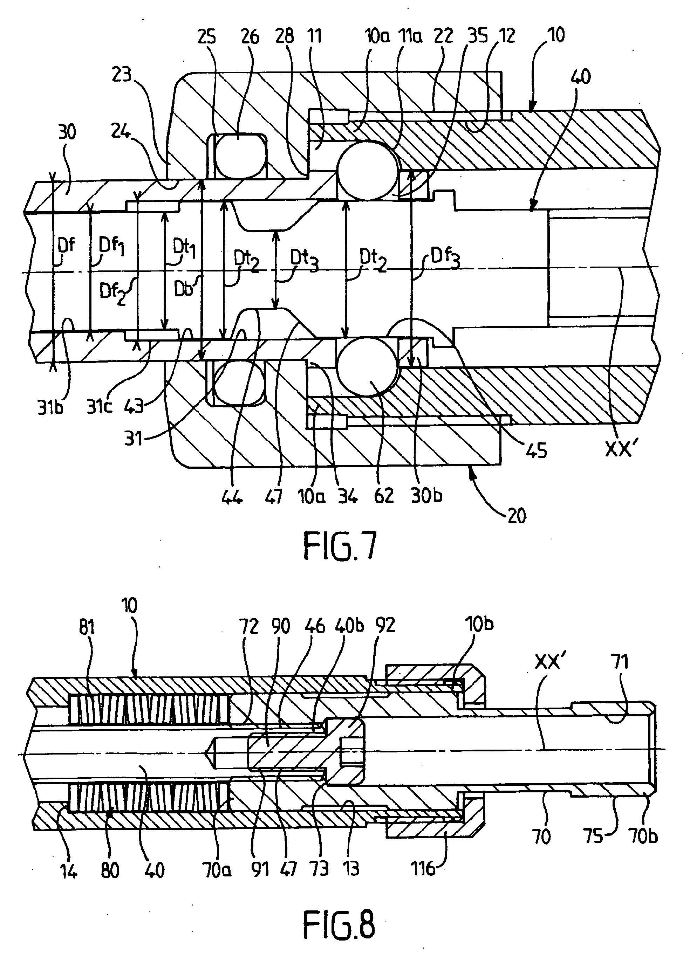

L'agrafe d'épinglage 1 selon la présente invention est représentée en coupe sur la figure 1 dans sa configuration prête à être introduite dans des orifices coaxiaux 2 et 3 préalablement percés dans une structure composée d'au moins deux éléments 4 et 5 à assembler, telles que des tôles d'avion. Les figures 2 à 6 illustrent les différentes étapes d'utilisation de cette agrafe qui comporte les éléments suivants :
- Un corps cylindrique creux 10 s'étendant selon un axe de symétrie XX'. Le corps creux 10 comporte, au niveau d'une extrémité proximale 10a, un chambrage interne 11 dont le fond présente; dans l'exemple de la figure 7, un raccordement rayonné 11a destiné à recevoir un système de blocage en translation 60 décrit plus loin. Dans l'exemple des figures 1 à 6, le chambrage interne 11 est cylindrique à fond plat de manière à recevoir une bague d'usure 11 b amovible et interchangeable. Typiquement, cette bague 11b est réalisée dans un matériau métallique d'une résistance comprise entre 1300 MPa et 1500 MPa. La bague 11b présente le même fond rayonné 11a que celui du chambrage interne 11 de la figure 7. Un filetage externe proximal 12 est également prévu sur la périphérie du corps creux 10 pour fixer une bague d'appui 20 décrite plus loin. L'extrémité distale 10b du corps creux 10 comporte un alésage lisse 13 et un épaulement 14 destinés à recevoir un entraîneur 70 et un organe élastique de compression 80, lesquels seront décrits plus loin. Le corps creux 10 présente une section polygonale externe 15 au niveau de son extrémité distale 10b, par exemple hexagonale, pour pouvoir recevoir un outillage tel qu'une clé plate ou une visseuse adaptée. Pour des raisons pratiques de montage des composants de l'agrafe et de maintien de ceux-ci dans le corps creux 10, le diamètre de ce dernier est réduit à l'endroit de son extrémité distale 10b par rabattement et sertissage d'une portion initiale 16 tubulaire, après la mise en place des composants décrits ci-après ;
- Une bague d'appui 20 formant obturateur dotée d'un filetage interne 22, destiné à coopérer avec le filetage externe proximal 12 du corps cylindrique creux 10, et d'une face d'appui 23 percée d'un orifice coaxial 24 de diamètre Db sensiblement égal à celui des perçage 2 et 3 ménagés respectivement dans l'épaisseur des éléments structuraux 4 et 5 à assembler. La bague d'appui 20 présente également une gorge interne 25 destinée à recevoir un joint torique 26 faisant office de moyen d'étanchéité avec un fourreau 30 décrit ci-après. La bague 20, une fois vissée sur le corps creux 10, vient en butée contre l'extrémité proximale 10a de celui-ci ;
- Un fourreau 30 tubulaire muni d'un perçage axial traversant 31 constitué par une portion proximale 31a comportant une section interne polygonale, par exemple hexagonale, adaptée pour recevoir un manchon 50 de forme complémentaire décrit plus loin, une portion médiane 31b présentant un alésage lisse de diamètre Df1, et une portion distale 31c présentant un alésage lisse de diamètre Df2 supérieur à Df1 (voir figure 7). Le fourreau 30 possède également, le long de ses portions proximale 31 a et médiane 31b, un diamètre externe Df adapté pour coulisser avec un jeu minimal à l'intérieur de l'orifice circulaire 24 ménagé dans la face 23 de la bague d'appui 20. La portion de diamètre externe Df se prolonge axialement, en direction de l'extrémité distale 31c du fourreau 30, par un épaulement radial 34 destiné à venir prendre appui sur une face interne 28 de la bague 20, ledit épaulement 34 étant lui-même percé de plusieurs orifices radiaux 35 permettant de loger le système de blocage 60 à billes 62. L'épaulement radial 34 présente une forme externe hexagonale qui coopère avec une forme complémentaire ménage le long de la partie lisse 13 du corps creux 10 afin d'empêcher la rotation de la tige 40. De plus, le fourreau 20 est doté à son extrémité proximale 31 a d'un chanfrein conique 36 formant un rebord d'appui contre lequel repose l'embout tubulaire 50 ;

- Une tige axiale de traction 40 présentant successivement, à partir de son extrémité proximale 40a, un filetage extérieur 41 destiné à coopérer avec l'embout 50, une première portion cylindrique 42 de diamètre calibré Dt1 adaptée pour coulisser avec un jeu minimal dans la portion médiane 31b du fourreau tubulaire 30, une seconde portion cylindrique 43 de diamètre Dt2 supérieur au diamètre Dt1, une gorge annulaire 44 dont les détails de forme et de dimensions sont décrits plus loin, une troisième portion cylindrique 45 de même diamètre Dt2 que celui de la seconde portion cylindrique 43, une quatrième portion cylindrique située au niveau de son extrémité distale 40b et présentant un filetage extérieur 46 destiné à recevoir un entraîneur 70 et un filetage intérieur 47 destiné à recevoir une vis d'arrêt 90. Comme cela est visible sur la figure 7, la gorge annulaire 44 présente un diamètre Dt3 inférieur aux diamètres Dt1 et Dt2. Plus précisément, le diamètre Dt3 est sensiblement égal au diamètre externe Df3 du fourreau 30 au niveau de son extrémité distale minoré d'environ une fois le diamètre des billes 62 de sorte que les billes peuvent se rétracter dans la gorge 44 sans dépasser dudit diamètre Df3, le diamètre réduit Dt3 étant raccordé avec la troisième portion cylindrique 45 par un chanfrein conique approprié 47. Cette gorge 44 est située à une distance prédéfinie de l'extrémité proximale 40a de la tige de traction 40 ;
- Un embout tubulaire amovible 50 fermé à une extrémité proximale 50a, dont le diamètre extérieur De1 est identique au diamètre externe Df du fourreau tubulaire 30 (figure 1) pour se terminer par une face d'appui chanfreinée 51 destinée à reposer sur la face d'appui chanfreinée 36 du fourreau. L'embout 50 présente intérieurement trois portions successives, à savoir, au niveau de l'extrémité proximale fermée 50a, un filetage intérieur 52 destiné à coopérer avec le filetage extérieur 41 de la tige de traction 40 ; au niveau de l'extrémité distale 50b, une portion 53 de diamètre intérieur De2 adapté pour coulisser avec un jeu minimal sur la première portion cylindrique 42 de diamètre Dt1 de la tige de traction 40 ; et une portion médiane 54 présentant une zone affaiblie mécaniquement 55 se présentant sous la forme d'une réduction localisée 56 de l'épaisseur de la paroi de l'embout 50 destinée à subir une déformation plastique comme cela sera décrit plus loin sous l'effet d'un effort axial de compression. La réduction locale de diamètre 56 est raccordée aux deux portions proximale et distale par deux chanfreins de faible pente de façon à assurer une variation progressive des contraintes appliquées par l'application dudit effort axial. La surface extérieure de l'embout 50 présente, à son extrémité distale 50b, après la face d'appui chanfreinée 51, une forme polygonale 57, par exemple hexagonale, coopérant avec la forme polygonale 31a du fourreau tubulaire décrit ci-dessus, lesdites formes polygonales permettant d'immobiliser en rotation l'embout amovible 50 lors des phases de vissage et dévissage de l'entraîneur 70 ;

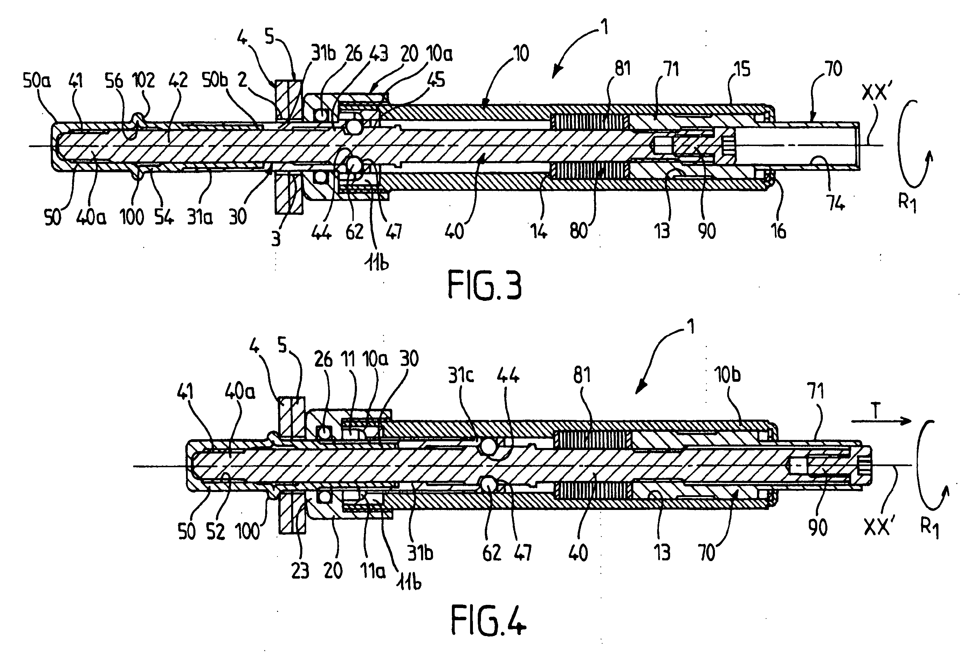

- Un système 60 de blocage en translation de l'ensemble fourreau/embout opérant après qu'un bourrelet 100 a été formé au niveau de la zone affaiblie mécaniquement, comme cela sera décrit ci après en relation avec les figures 2 et 3, ce système comportant une série de billes 62 destinées à être logées ou en dehors de la gorge 44 de la tige de traction 40;
- Un entraîneur 70 constitué par une pièce cylindrique creuse 71 percée axialement de part en part d'un orifice cylindrique. L'entraîneur 70 est doté, à une extrémité proximale 70a, d'un filetage intérieur 72 destiné à coopérer avec le filetage extérieur 46 de la tige de traction 40 ainsi que d'un épaulement 73 de diamètre extérieur majoré pour servir de butée à une tête de la vis d'arrêt 90. L'épaulement 73 se prolonge axialement, en direction de l'extrémité distale 70b de l'entraîneur, par un alésage cylindrique 74 de diamètre intérieur plus grand que le diamètre du filetage intérieur 72. Extérieurement, l'entraîneur 70 comporte une forme d'entraînement polygonale 75, par exemple hexagonale, pour recevoir un outil adapté tel qu'une clé ou un visseuse électrique ;

- Un organe compressible formant ressort de compression 80, constitué par plusieurs rondelles élastiques coaxiales 81 de raideur élevée, type rondelles Belleville, destiné à se comprimer sous l'effet de la précharge axiale induite lors la phase d'installation sur les éléments structuraux à assembler. Ces rondelles 81 sont maintenues autour de la tige de traction 40, à l'intérieur du corps creux 10, entre l'épaulement 14 de ce dernier et l'extrémité proximale 70a de l'entraîneur 70 ; et
- Une vis d'arrêt 90 présentant une portion filetée 91 destinée à être engagée dans le filetage intérieur 47 de la tige de traction 40 et une tête 92 de diamètre extérieur légèrement plus petit que le diamètre intérieur de l'alésage cylindrique 74 ménagé dans l'entraîneur 70, ladite tête 92 présentant une forme de prise de clé, par exemple une empreinte hexagonale creuse. Cette vis d'arrêt 90 est serrée puis collée dans le filetage intérieur 47 de la tige de traction 40 lors du montage des composants de l'agrafe 1. Elle sert à la fois de butée arrière pour éviter qu'en utilisation l'entraîneur 70 puisse s'échapper de la tige de traction 40, et aussi de moyen d'entraînement en rotation de la tige de traction 40 comme on le verra plus loin dans la partie fonctionnement.

### DESCRIPTION DU FONCTIONNEMENT

Comme cela est visible sur la figure 1, à l'état initial avant introduction de l'agrafe 1 dans des perçages 2 et 3 réalisés préalablement dans les éléments structuraux à assembler 4 et 5, l'embout amovible 50 est disposé à l'extrémité du fourreau tubulaire 30 de telle sorte que la forme polygonale extérieure 57 de l'embout 50 soit engagée dans la forme polygonale intérieure 31a du fourreau 30, afin d'immobiliser l'embout en rotation.

Le filetage 41 de la tige de traction 40 est alors vissée dans le filetage intérieur 52 de l'embout amovible 50 à l'aide d'une clé qui vient s'engager dans la tête creuse 92 de la vis d'arrêt 90.

Dans cette position, les billes 62 disposées dans les orifices radiaux 35 percés dans le fourreau 30 sont maintenues en position «radialement déployée» en raison de la présence de la portion cylindrique 45 de diamètre Dt2 de la tige de traction 40 mais aussi en appui sur le fond rayonné 11 a. Dans cette position, les billes 62 interdisent tout déplacement relatif en translation du fourreau 30 à l'intérieur du corps creux 10. Puisque les billes 62 sont en appui et frottent contre le fond rayonné 11a pour compenser l'effort axial de formation du bulbe, le fond 11a s'use à chaque utilisation. C'est pourquoi, dans l'exemple de réalisation du dispositif selon l'invention des figures 1 à 6, on prévoit de changer la bague d'usure amovible 11 b lorsque cela est nécessaire, afin d'assurer un fonctionnement optimal et durable dudit dispositif. Pour ce faire, on dévisse simplement la bague d'appui 20 pour extraire la bague amovible 11b usée et la remplacer par une bague amovible 11 b neuve, puis on revisse la bague d'appui 20.

Par ailleurs l'entraîneur 70 est engagé sur la partie extrême du filetage 47 situé à l'extrémité de la tige de traction 40. Dans cette configuration initiale, l'agrafe 1 peut-être engagée librement dans les perçages 2 et 3 des éléments structuraux à assembler 4 et 5 de telle sorte que la face d'appui 23 de la bague 20 vienne en contact avec la première face 5 des éléments structuraux (figure 2).

A l'aide d'une visseuse ou de tout autre moyen de vissage, l'entraîneur 70 est mis en rotation (flèche R1 de la figure 3) par rapport au corps creux 10 maintenu immobile au moyen de la prise de clé extérieure 15.

La rotation de l'entraîneur 70 dans le sens du vissage provoque le déplacement en translation de la tige de traction 40, par le biais de la liaison filetée entre ces deux pièces. La tige de traction 40, qui est elle-même vissée dans le filetage intérieur 52 de l'embout amovible 50, exerce sur celui-ci un effort de traction croissant alors que ledit embout 50 est bloqué en appui sur la face d'extrémité du fourreau 30 par l'intermédiaire des chanfreins 51 et 36.

Sous cet effort croissant, la portion médiane 54 à épaisseur réduite 56 de l'embout 50 commence à se déformer radialement par flambage. L'action de traction T de la tige 40 se poursuit (flèche R1 de la figure 3, puis de la figure 4) jusqu'à ce que le bourrelet 100 ainsi épanoui dans la portion médiane 54 de l'embout 50 s'aplatisse complètement. Dans cette position, la gorge annulaire 44 réalisée dans la portion intermédiaire de la tige de traction 40 vient se placer au droit des billes 62, lesquelles peuvent alors s'escamoter dans la gorge annulaire 44 et libérer le fourreau 40.

Pour pouvoir réaliser cette étape du fonctionnement, il faut donc que la gorge annulaire 44 soit positionnée à une distance déterminée de l'extrémité filetée 41 de la tige 40 de traction telle que la course axiale nécessaire pour obtenir l'aplatissement complet du bourrelet 100, amène cette gorge au droit du chambrage 11 à fond rayonné 11a et des billes 62 logées dans le fourreau tubulaire 30.

L'action de rotation de l'entraîneur 70 étant maintenue (flèche R1 de la figure 4), l'ensemble tige/fourreau/embout poursuit sa course de retrait en translation d'une part à l'intérieur du corps creux 10 et d'autre part à l'intérieur des perçages 2 et 3 des éléments structuraux 4 et 5, et ceci jusqu'à ce que la face d'appui 102 du bourrelet 100 vienne au contact de la seconde face des éléments structuraux à assembler 4 et 5.

Le dispositif ressort 80 se trouve alors progressivement mis en compression entre l'épaulement 14 du corps creux 10 et la face d'appui intérieure constituée par l'extrémité proximale 70a de l'entraîneur 70, ceci sous un effort axial déterminé qui induit un effort égal d'accostage des éléments structuraux.

Le moyen de vissage utilisé dispose d'un système dynamométrique intégré de déclenchement sous un couple prédéterminé de telle sorte que la mise en rotation et le chargement sous effort axial s'arrêtent lorsque l'effort d'accostage voulu est atteint.

La présence du dispositif ressort compressible 80 permet de maintenir une tension d'accostage élevée même s'il se produit une relaxation mécanique de l'accostage, notamment sous l'effet du fluage des résines ou mastics d'interposition.

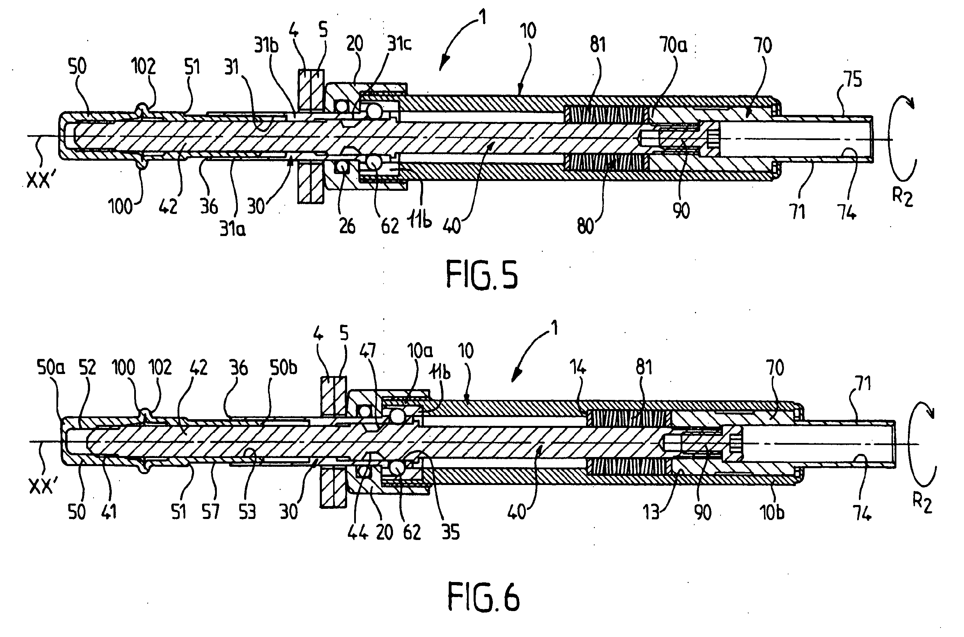

Après consolidation de l'assemblage, par exemple après fluage et polymérisation des mastics ou résines, l'agrafe d'épinglage peut-être déposée aisément par dévissage de l'entraîneur 70 (flèche R2 des figures 5 et 6). La tige de traction 40 se trouve alors repoussée vers sa position initiale avant installation, jusqu'à ce que les billes 62 reprennent leur place en position déployée dans le chambrage 11 à l'avant du corps creux 10, et jusqu'à ce que la face d'appui de la tête 92 de la vis d'arrêt 90 vienne en butée sur l'épaulement 73 de l'entraîneur 70.

A ce stade, la rotation de l'entraîneur 70 provoque la mise en rotation de la tige 40 dont le filetage intérieur 41 se dévisse dans le filetage extérieur 52 de l'embout 50 puisque celui-ci est immobilisé en rotation par les formes hexagonales respectives 57 et 31 a dudit embout et du fourreau 30, lequel est lui-même immobilisé en rotation à l'intérieur du corps creux 10. L'action de dévissage se poursuit jusqu'à ce que le filetage intérieur 52 de l'embout 50 se désengage du filetage extérieur 41 de la tige de traction 40.

L'opérateur peut alors extraire l'agrafe des perçages 2 et 3. L'agrafe 1 peut ensuite être réutilisée en remplaçant simplement l'embout déformé 50 par un embout neuf.

On remarquera que sous l'effort axial de compression exercé au cours de la pose, les faces extrêmes coniques 51 et 36 de l'embout et du fourreau sont maintenues en contact intime de sorte que l'interface est rendu étanche à toute pénétration de résines ou de mastics à l'intérieur de l'agrafe susceptible de venir bloquer le mécanisme et de rendre l'agrafe indémontable sans destruction.

Par ailleurs, l'étanchéité entre le diamètre extérieur Df du fourreau 30 et le diamètre intérieur Db de la bague d'appui 20 est renforcé par l'adjonction du joint torique 26 logé dans la gorge intérieure 25.

L'embout 50 reste ainsi aisément séparable du fourreau 30 et son simple remplacement par un embout neuf dispense de devoir recourir à de fastidieuses et coûteuses opérations de nettoyage des agrafes avant réemploi comme cela est nécessaire avec les agrafes usuelles dotées de pinces rétractables, à l'intérieur desquelles viennent s'insinuer les mastics et résines.

L'originalité de l'agrafe d'épinglage conforme à la présente invention tient entre autres à ce que dans un premier temps, en raison de la conception interne de l'embout 50, l'épanouissement radial du bourrelet 100 s'initie à une distance suffisamment grande des éléments structuraux à assembler, ce qui permet de préserver l'arrête du perçage 2 de toute contrainte radiale d'expansion susceptible d'endommager lesdits éléments structuraux. Cette particularité résulte du fait que l'embout tubulaire déformable 50 constitue un élément indépendant du fourreau 30 et qu'il se situe entièrement à l'écart des perçages 2 et 3 des éléments structuraux 4 et 5 pendant toute la phase d'évasement et d'épanouissement du bourrelet 100. Dans un second temps, l'ensemble embout/fourreau est tiré par la tige de traction 40 à l'intérieur du perçage 2 et 3 des éléments structuraux 4 et 5 jusqu'à ce que la face d'appui 102 du bourrelet 100 vienne au contact de la face opposée desdits éléments et exerce sur ces derniers un effort d'accostage prédéterminé en collaboration avec la bague d'appui.

Ces deux étapes s'enchaînent automatiquement au cours de la même action de traction continue de la tige (figures 3 et 4), le passage de l'étape de formation du bourrelet 100 à l'étape d'accostage étant déclenché par le déplacement de la rainure circulaire 44 de la tige 40 qui vient se positionner au droit du fond du chambrage du corps creux tandis que les billes 62 viennent s'escamoter dans la rainure circulaire. Le fourreau 30 n'étant plus retenu par les billes 62 peut alors coulisser et se rétracter à l'intérieur des perçages 2 et 3 jusqu'à ce que la face d'appui du bourrelet 102 vienne au contact de la face opposée des éléments structuraux. Ce principe de fonctionnement à deux étapes successives s'enchaînant automatiquement, commandées par le déplacement des billes 62, n'existe dans aucun autre système de fixation aveugle:

Une autre caractéristique avantageuse de cette agrafe d'épinglage réside dans le fait que l'embout déformable 50 est amovible et interchangeable. De plus il est fermé à une extrémité 50a et présente à l'autre extrémité un chanfrein conique extérieur 51 qui vient prendre appui sur le chanfrein conique 36 du fourreau tubulaire 30. Ainsi sous l'effort axial de compression appliqué lors de la pose, ces deux chanfreins sont maintenus en contact intime, rendant l'interface embout/fourreau étanche à toute pénétration de résines ou mastics à l'intérieur de l'agrafe, lesquels pourraient bloquer le mécanisme après polymérisation. Ainsi l'agrafe peut ensuite être aisément déposée par l'action de dévissage qui repousse la tige de traction et l'ensemble embout/fourreau jusqu'au désengagement du filetage externe 41 de la tige de traction 40. L'agrafe peut alors être aisément extraite des perçages 2 et 3.

Du fait que les produits polymérisables n'ont pas pu pénétrer dans le mécanisme, aucune opération coûteuse et fastidieuse de nettoyage/décapage des agrafes n'est nécessaire, comme c'est le cas avec les agrafes à pinces usuelles. De plus, l'embout déformé (non réutilisable) peut facilement être remplacé par un embout amovible neuf en vue d'une nouvelle utilisation de la même agrafe au moindre coût.

L'embout 50 étant amovible, celui-ci peut être réalisé dans divers matériaux, métalliques ou non, déformables plastiquement, tels que des alliages d'aluminium, aciers inoxydables austénitiques, alliages de nickel ou de titane, voire certains matériaux élastomères, de sorte que l'effort de formation du bourrelet 100 ainsi que sa résistance mécanique peuvent être ajustés en fonction du niveau d'effort d'accostage recherché.

Un autre aspect intéressant de l'agrafe réside dans le fait que l'embout amovible 50 et le fourreau 30 sont immobilisés en rotation l'un par rapport à l'autre par un accouplement mécanique polygonal, par exemple hexagonal. Ainsi, lorsque l'embout déformable 50 s'épanouit dans sa portion médiane 54 pour former le bourrelet 100 et que ce dernier vient prendre appui sur la face des élément structuraux, aucun mouvement de rotation axial du bourrelet 100 n'est possible, évitant ainsi tout endommagement par friction sur l'élément structurel 4 sur lequel le bourrelet prend appui, comme cela peut être le cas avec d'autres systèmes de fixation aveugles installées par une action de vissage. Ceci présente une importance notable dans le cas d'éléments structuraux en composite afin d'éviter que le bourrelet n'arrache de la matière (délaminage) au niveau des perçages.

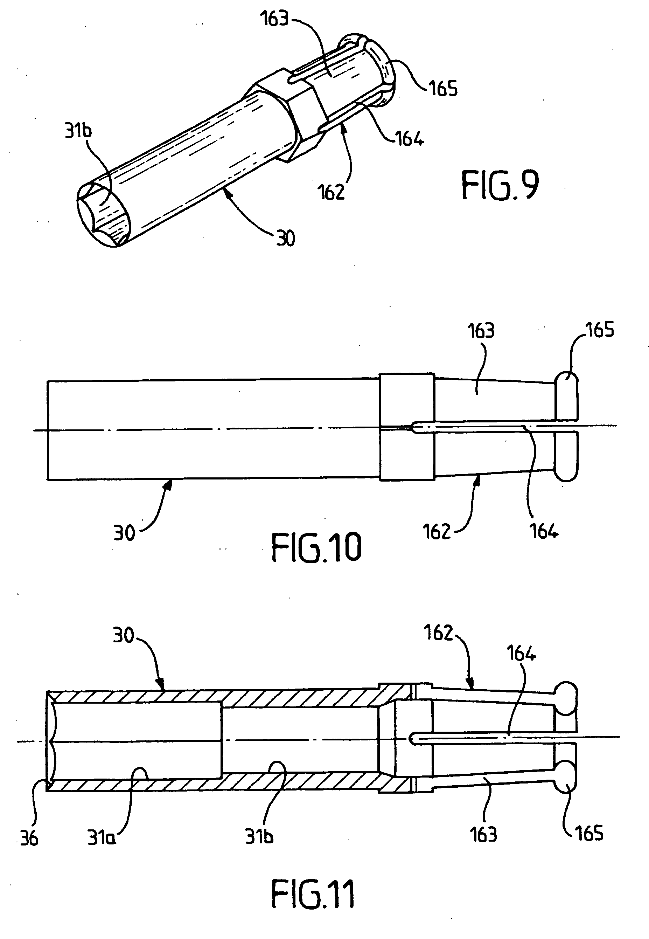

Dans le cas d'agrafes à diamètre important, l'effort axial développé lors de la pose peut atteindre des valeurs élevées, de sorte que les pressions locales de contact entre les billes et le chambrage à fond rayonné risquent d'atteindre des niveaux excessifs pouvant entraîner le matage des surfaces de contact. La variante de réalisation décrite ci-après en relation avec les figures 9 à 11 permet de résoudre ce problème.

Dans cette variante, les billes 62 sont remplacées par une bague fendue élastique 162 solidaire du fourreau 30 qui présente plusieurs segments 163 séparés par des fentes 164 qui se prolongent sur une longueur suffisante pour conférer une élasticité radiale aux lamelles ainsi obtenues. La bague fendue 162 est ainsi capable de s'ouvrir radialement pour laisser passer la seconde portion cylindrique de la tige de traction 40 et venir prendre appui sur le fond rayonné du chambrage 11 du corps creux 10.

Lors de l'installation de l'agrafe 1 sur les éléments structuraux à assembler 4 et 5, la tige de traction 40 se déplace axialement pendant l'épanouissement radial du bourrelet 100 et la rainure circulaire 44 vient se positionner au droit des extrémités 165 des segments 163, lesquels viennent s'escamoter dans la rainure circulaire grâce à l'effet « ressort » conféré aux lamelles élastiques.

En effet, ces extrémités 165 forment des excroissances bulbeuses assez semblables aux billes 62 du premier mode de réalisation puisqu'elles sont de forme pseudo torique. Ces excroissances ont donc la même fonction que les billes 62, c'est-à-dire de laisser coulisser la tige de traction 30 dans un premier puis de permettre l'entraînement de l'embout 50 pour former le bourrelet 100, avec l'avantage d'augmenter considérablement les surfaces de contact afin de réduire la pression locale et d'éviter les phénomènes de matage.

Toutes les autres étapes de l'installation de l'agrafe et de la dépose ultérieure restent identiques à la description générale faites en relation avec les figure 1 à 8.

Selon une autre mode de réalisation de l'invention illustré par la figure 8, la partie refermée 16 qui permet de bloquer axialement les différents éléments dans le corps creux est remplacée par un écrou 116 vissé sur l'extrémité distale 10b du corps creux.

II va de soi que la description détaillée de l'objet de l'Invention, donnée uniquement à titre d'illustration, ne constitue en aucune manière une limitation, les équivalents techniques étant également compris dans le champ de la présente invention.

Ainsi, le joint torique 26 peut être remplacé par tout autre type de moyen d'étanchéité adapté à ce type d'agrafe.

De même, les rondelles Belleville peuvent être remplacées par d'autres organes de compression, par exemple un ressort hélicoïdal.

## Revendications

1. Dispositif de fixation provisoire et réutilisable (1), tel qu'une agrafe d'épinglage, destiné au pré-assemblage d'au moins deux éléments structuraux (4, 5) préalablement munis de perçages coaxiaux (2, 3) pour recevoir ledit dispositif, comprenant :
- un corps cylindrique creux (10) s'étendant selon un axe d'allongement (XX'),
- une bague d'appui (20) disposée à une extrémité proximale (10a) du corps creux (10) et contre laquelle un des éléments structuraux (4 ; 5) est destiné à reposer en position de fixation du dispositif (1),
- une tige filetée de traction (40) traversant le corps creux (10) coaxialement à celui-ci et destinée à être introduite dans les perçages coaxiaux (2, 3) respectifs des éléments structuraux (4, 5) à fixer,
- des moyens de serrage reliés à la tige filetée de traction et destinés à maintenir les éléments structuraux (4, 5) l'un contre l'autre, les moyens de serrage comprenant au moins un embout tubulaire amovible (50) adapté pour être monté sur une extrémité fileté proximale (40a) de la tige de traction (40) et pouvant être compacté localement axialement sous l'effet d'une force exercée sur ladite tige de traction de manière à former un bourrelet radial (100) destiné à prendre les élément structuraux (4, 5) en sandwich entre ce dernier et la bague d'appui (20),
**caractérisé en ce que**
- il comporte un fourreau (30) présentant un rebord d'appui (36) sur lequel repose l'embout tubulaire (50), et permettant la formation du bourrelet radial (100) à distance des éléments structuraux.

2. Dispositif selon la revendication 1, **caractérisé en ce que** l'embout tubulaire (50) est pourvu localement d'une zone affaiblie mécaniquement (55) destinée à former le bourrelet (100) sous l'effet de la force de traction axiale exercée sur la tige (40).

3. Dispositif selon la revendication 2, **caractérisé en ce que** la zone affaiblie mécaniquement (55) est définie par une réduction d'épaisseur (56) de l'embout tubulaire (50) adaptée pour se déformer radialement vers l'extérieur, à une distance déterminée (F) de la bague d'appui (20), pour former le bourrelet (100) par épanouissement.

4. Dispositif selon l'une quelconque des revendications précédentes, **caractérisé en ce que** l'embout tubulaire (50) est cylindrique et vissé sur l'extrémité proximale (40a) de la tige de traction (40).

5. Dispositif selon la revendication 1, **caractérisé en ce que** le fourreau (30) présente un perçage interne axial de forme polygonale (31 a), par exemple hexagonale, adapté pour coopérer étroitement avec une forme polygonale (57) correspondante ménagée sur une portion distale externe (50b) de l'embout tubulaire (50) de manière à bloquer ce dernier en rotation par rapport audit fourreau (30).

6. Dispositif selon l'une des revendications 4 ou 5, **caractérisé en ce que** le fourreau (30) présente un diamètre externe Df sensiblement égal au diamètre externe De1 de l'embout tubulaire (50).

7. Dispositif selon l'une quelconque des revendications 4 à 6, **caractérisé en ce que** le fourreau (30) présente, sur la majeure partie de sa longueur, un diamètre externe Df adapté pour coulisser avec un jeu minimal à l'intérieur d'un orifice (24) circulaire ménagé dans la bague d'appui (20)

8. Dispositif selon l'une quelconque des revendications 6 à 7, **caractérisé en ce que** le fourreau (30) est pourvu, au-delà de la portion de diamètre Df, en direction de son extrémité distale (30b), d'un épaulement (34) destiné à venir prendre appui sur la face interne d'extrémité (25) de la bague (20), ledit épaulement (34) étant lui-même percé de plusieurs orifices radiaux (35) permettant de loger un système de blocage en translation (60) du fourreau (30) par rapport à la tige de traction (40)

9. Dispositif selon la revendication 8, **caractérisé en ce que** le système de blocage en translation (60) comporte des billes (62) coopérant avec une gorge annulaire (44) réalisée dans la tige filetée (40) et ayant un diamètre égal au diamètre externe Df3 du fourreau (30) mesuré au niveau de son extrémité distale et minoré d'environ une fois le diamètre des billes (62) de sorte que les billes peuvent se rétracter dans la gorge (44) sans dépasser dudit diamètre Df3.

10. Dispositif selon la revendication 8, **caractérisé en ce que** le système de blocage en translation (60) est constitué par une bague fendue (162) solidaire du fourreau (30) et comportant plusieurs segments (163) séparés par des fentes (164) de manière à former des languettes radialement élastiques dont les extrémités (165) présentent des excroissances radiales de forme pseudo torique pouvant s'escamoter dans la rainure circulaire (44).

11. Dispositif selon la revendication 9 ou 10, **caractérisé en ce que** la gorge annulaire (44) présente, sur son bord distal, un chanfrein conique (47) destiné à guider le mouvement radial des billes (62) ou des extrémités (165) de la bague fendue (162) lors de leur entrée/sortie de ladite gorge (44) sous l'effet du déplacement axial de la tige de traction (40).

12. Dispositif selon l'une quelconque des revendications précédentes, **caractérisé en ce que** l'embout tubulaire (50) présente à son extrémité ouverte (50b), un chanfrein extérieur (51) destiné à coopérer avec un chanfrein conique (36) correspondant ménagé à l'extrémité proximale (30a) du fourreau (30).

13. Dispositif selon l'une quelconque des revendications précédentes, **caractérisé en ce que** l'embout tubulaire (50) présente une extrémité proximale fermée (50a) et un filetage intérieur (52) destiné à coopérer avec un filetage extérieur (41) réalisée au niveau de l'extrémité proximale (40a) de la tige de traction (40).

14. Dispositif selon l'une quelconque des revendications précédentes, **caractérisé en ce qu'**il comporte en outre un entraîneur de vissage (70) monté à l'extrémité distale (40b) de la tige de traction (40) pour faire coulisser celle-ci axialement, en particulier lors de la formation du bourrelet radial (100).

15. Dispositif selon la revendication 14, **caractérisé en ce que** l'entraîneur (70) est constitué par une pièce cylindrique creuse percée de part en part d'un orifice axial (71) doté, à une extrémité proximale (71 a), d'un filetage intérieur (72) destiné à coopérer avec un filetage extérieur (46) de la tige de traction (40).

16. Dispositif selon la revendication 15, **caractérisé en ce que** l'orifice axial (71) de l'entraîneur (70) comporte également un épaulement interne (73) de diamètre supérieur au diamètre du filetage (72) de manière à servir de surface d'appui à une vis d'arrêt (90) fixée dans un orifice interne fileté (47) ménagé au niveau de l'extrémité distale (70b) de la tige de traction (40).

17. Dispositif selon la revendication 16, **caractérisé en ce que** l'orifice axial (71) de l'entraîneur (70) forme, au niveau de son extrémité distale (71 a), un alésage cylindrique (74) de diamètre intérieur supérieur au diamètre du filetage intérieur (72) de sorte que la vis de blocage (90) peut être introduite par ce logement.

18. Dispositif selon l'une quelconque des revendications précédentes, **caractérisé en ce que** le corps creux (10) présente, au niveau de son extrémité proximale (10a), un filetage externe (12) coopérant avec un filetage interne (22) de la bague d'appui (20).

19. Dispositif selon l'une quelconque des revendications précédentes, **caractérisé en ce que** le corps creux (10) comporte, proche de son extrémité proximale (10a), un chambrage interne (11) à fond rayonné (11 a).

20. Dispositif selon l'une quelconque des revendications 1 à 18, **caractérisé en ce que** le corps creux (10) comporte, proche de son extrémité proximale (10a), un chambrage interne (11) cylindrique à fond plat et apte à recevoir une bague d'usure (11b) amovible et interchangeable à fond rayonné (11 a).

21. Dispositif selon l'une quelconque des revendications précédentes, **caractérisé en ce que** qu'il comporte des moyens d'étanchéité (26) portés par la bague d'appui (20), par exemple un joint torique logé dans une gorge annulaire interne (25).

22. Dispositif selon l'une quelconque des revendications précédentes, **caractérisé en ce qu'**il comporte, à l'intérieur du corps creux (10), un organe compressible assurant la fonction de ressort de compression (80).

23. Dispositif selon la revendication 22 et l'une quelconque des revendications 14 à 18, **caractérisé en ce que** l'organe compressible, par exemple des rondelles Belleville, prend appui contre un épaulement interne (14) du corps creux (10) d'une part et l'extrémité proximale (70a) de l'entraîneur (70) d'autre part.

24. Procédé de fixation provisoire destiné au pré-assemblage d'au moins deux éléments structuraux (4, 5) préalablement munis de perçages coaxiaux (2, 3) et mettant en oeuvre un dispositif (1) selon l'une quelconque des revendications précédentes, **caractérisé en ce qu'**il comporte des étapes consiste à
- réaliser des moyens de serrage des éléments structuraux (4, 5), sous la forme d'un bourrelet radial (100), à distance desdits éléments, notamment des perçages (2, 3),
- puis emmener le bourrelet (100) au contact desdits éléments.

25. Procédé selon la revendication 24, **caractérisé en ce que** le bourrelet (100) est réalisé sur un embout tubulaire (50) adapté pour être monté de manière amovible sur une tige de traction (40) du dispositif (1) et pourvu d'une zone affaiblie mécaniquement (55) se déformant radialement par épanouissement pour former ledit bourrelet (100).

## Claims

1. A reusable temporary fastening device (1), such as a pin clamp, for preassembling at least two structural members (4, 5) previously formed with coaxial bores (2, 3) for receiving said device, which comprises:
- a hollow cylindrical body (10) extending along an elongation axis (XX'),
- a bearing ring (20) provided at a proximal end (10a) of the hollow body (10) and against which one of the structural members (4, 5) is intended to bear in a fastening position of the device (1),
- a pulling threaded rod (40) extending through the hollow body (10) and coaxial thereto, and to be inserted into the respective coaxial bores (2, 3) of the structural members (4, 5) to be attached,
- a tightening means connected to the pulling threaded rod, for maintaining the structural members (4, 5) against each other, wherein the tightening means includes at least one removable tubular end piece (50) adapted to be mounted on a proximal threaded end (40a) of the pulling rod (40), and can be locally axially compacted under the action of a force applied on said pulling rod in order to form a radial bead (100) for sandwiching the structural members (4, 5) between the latter and the bearing ring (20),
**characterised in that**
- the device comprises a sheath (30) having a bearing ledge (36) on which the tubular end piece (50) bears, and enabling the formation of the radial bead (100) at a distance from the structural members.

2. A device according to claim 1, **characterised in that** the tubular end piece (50) is locally fitted with a mechanically weakened area (55) for forming the bead (100) under the axial pulling force exerted on the rod (40).

3. A device according to claim 2, **characterised in that** the mechanically weakened area (55) is defined by a reduction in thickness (56) of the tubular end piece (50) adapted to be radially deformed outwards, at a determined distance (F) from the bearing ring (20), so as to form the bead (100) via enlargement.

4. A device according to any one of the previous claims, **characterised in that** the tubular end piece (50) is cylindrical and screwed onto the proximal end (40a) of the pulling rod (40).

5. A device according to claim 1, **characterised in that** the sheath (30) has an axial internal bore, polygonal in shape (31 a), for example a hexagon, adapted to work in close collaboration with a corresponding polygonal shape (57) made on an outer distal portion (50b) of the tubular end piece (50) so as to lock the latter in rotation with respect to said sheath (30).

6. A device according to one of claims 4 or 5, **characterised in that** the sheath (30) has an outer diameter Df substantially equal to the outer diameter De1 of the tubular end piece (50).

7. A device according to any one of claims 4 to 6, **characterised in that** the sheath (30) has, over the majority of its length, an outer diameter Df adapted for sliding with minimal clearance within a circular orifice (24) made in the bearing ring (20).

8. A device according to any one of claims 6 to 7, **characterised in that** the sheath (30) is fitted, beyond the portion with a diameter Df, towards its distal end (30b), with a shoulder (34) intended to be supported on the inner side (25) of the end of the ring (20), said shoulder (34) being itself perforated with multiple radial orifices (35) enabling the housing of a system (60) for locking the sheath (30) in translation with regard to the pulling rod (40).

9. A device according to claim 8, **characterised in that** the translation locking system (60) comprises balls (62) working with a ring-shaped groove (44) made within the threaded rod (40) and with a diameter equal to the outer diameter Df3 of the sheath (30) measured at its distal end and reduced by approximately once the diameter of the balls (62) so that the balls can retract within the groove (44) without exceeding said diameter Df3.

10. A device according to claim 8, **characterised in that** the translation locking system (60) is comprised from a split ring (162) connected to the sheath (30) and comprising multiple segments (163) separated by divisions (164) so as to form radially elastic splines, the ends (165) of which having pseudo-toric shaped radial outgrowths capable of retracting into the circular channel (44).

11. A device according to claim 9 or 10, **characterised in that** the ring-shaped groove (44) has, on its distal edge, a conical chamfer (47) for guiding the radial movement of the balls (62) or the ends (165) of the split ring (162) during their entrance/exit from said groove (44) under axial displacement of the pulling rod (40).

12. A device according to any one of the previous claims, **characterised in that** the tubular end piece (50) has, at its open end (50b), an outer chamfer (51) for working with a corresponding conical chamfer (36) fitted at the proximal end (30a) of the sheath (30).

13. A device according to any one of the previous claims, **characterised in that** the tubular end piece (50) has a closed proximal end (50a) and an inner thread (52) for working with an outer thread (41) produced on the proximal end (40a) of the pulling rod (40).

14. A device according to any one of the previous claims, **characterised in that** it also comprises a screwing driver (70) mounted at the distal end (40b) of the pulling rod (40) so as to slide the pulling rod axially, in particular during the formation of the radial bead (100).

15. A device according to claim 14, **characterised in that** the driver (70) is comprised from a hollow cylindrical part perforated through and through with an axial orifice (71) equipped, at a proximal end (71 a), with an inner thread (72) for working with an outer thread (46) of the pulling rod (40).

16. A device according to claim 15, **characterised in that** the axial orifice (71) of the driver (70) also comprises an inner shoulder (73) with a larger diameter than the diameter of the thread (72) so as to act as a bearing surface to a stop screw (90) set within a threaded inner orifice (47) made at the distal end (70b) of the pulling rod (40).

17. A device according to claim 16, **characterised in that** the axial orifice (71) of the driver (70) forms, at its distal end (71 a), a cylindrical bore (74) whose inner diameter is larger than the diameter of the inner thread (72) so that the locking screw (90) can be inserted by this housing.

18. A device according to any one of the previous claims, **characterised in that** the hollow body (10) has, at its proximal end (10a), an outer thread (12) working with an inner thread (22) of the bearing ring (20).

19. A device according to any one of the previous claims, **characterised in that** the hollow body (10) comprises, near to its proximal end (10a), an inner recess (11) with a radiating base (11a).

20. A device according to any one claims 1 to 18, **characterised in that** the hollow body (10) comprises, near to its proximal end (10a), a cylindrical inner recess (11) with a flat base and suitable for receiving a removable interchangeable wearing ring (11 b) with a radiating base (11 a).

21. A device according to any one of the previous claims, **characterised in that** it comprises sealing means (26) born by the bearing ring (20), for example an O-ring housed within an inner ring-shaped groove (25).

22. A device according to any one of the previous claims, **characterised in that** it comprises, within the hollow body (10), a compressible member acting as a compression spring (80).

23. A device according to claim 22 and to any one of claims 14 to 18, **characterised in that** the compressible member, for example Belleville washers, is supported against an inner shoulder (14) of the hollow body (10) on the one hand, and the proximal end (70a) of the driver (70) on the other hand.

24. A temporary fastening method for preassembling at least two structural members (4, 5) previously formed with coaxial bores (2, 3) and implementing a device (1) according to any one of the previous claims, **characterised in that** it comprises the following steps of:
- producing tightening means for tightening the structural members (4, 5) in the form of a radial bead (100), at a distance from said members, in particular bores (2, 3),
- then bringing the bead (100) into contact with said members.

25. A method according to claim 24, **characterised in that** the bead (100) is produced on a tubular end piece (50) adapted to be mounted in a removable manner onto a pulling rod (40) of the device (1) and equipped with a mechanically weakened area (55), becoming radially deformed by enlargement to form said bead (100).

## Patentansprüche

1. Wiederverwendbare vorübergehende Befestigungsvorrichtung (1) wie eine Bolzenklamme zur Vormontage von mindestens zwei vorab koaxial durchlochten (2, 3) Bauteilen (4, 5), um die genannte Vorrichtung aufzunehmen, aufweisend:
- einen zylindrischen Hohlkörper (10), der sich entlang einer Dehnungsachse (XX') erstreckt,
- einen Lagerring (20) an einem proximalen Ende (10a) des Hohlkörpers (10) angeordnet und gegen den, ein der Bauteile (4, 5) dazu bestimmt ist, in einer Befestigungsposition der Vorrichtung (1) zu liegen,
- eine Gewindezugstange (40), die koaxial durch dem Hohlkörper (10) verläuft und die dazu bestimmt ist in die entsprechenden koaxial durchlochten (2, 3) zu befestigenden Bauteilen (4, 5) eingeführt zu werden,
- Spannmitteln verbunden an der Gewindezugstange und die dazu bestimmt sind die Bauteilen (4, 5) gegeneinander zu halten, wobei die Spannmitteln mindestens ein abnehmbares rohrförmiges Endstück (50) geeignet, um an einem proximalen mit Gewinde versehenen Ende (40a) der Zugstange (40) eingebaut zu werden und das unter ausgeübte Krafteinwirkung auf die genannte Zugstange, derart lokal und axial verdichtet werden kann, dass ein Radialwulst (100) gebildet wird, der zum Einkeilen der Bauteilen (4, 5) zwischen diesen Radialwulst und den Lagerring (20) bestimmt ist, aufweisen,
**dadurch gekennzeichnet, dass**
- sie eine Hülle (30) aufweist, die aus einem Auflageflansch (36) auf welchen ein rohrförmiges Endstück (50) liegt, besteht, und die Bildung des Radialwulsts (100) entfernt von den Bauteilen ermöglicht.

2. Vorrichtung nach Anspruch 1, **dadurch gekennzeichnet, dass** das rohrförmiges Endstück (50) im lokalen Bereich von eine mechanisch geschwächte Zone (55) versehen ist, um die Wulst (100) durch die auf die Stange (40) ausgeübte axiale Zugkraftwirkung, zu bilden.

3. Vorrichtung nach Anspruch 2, **dadurch gekennzeichnet, dass** die mechanisch geschwächte Zone (55) durch eine Dickenreduktion (56) des rohrförmiges Endstück (50) definiert, angeordnet um sich in einer bestimmte (F) Entfernung von dem Auflagering (20) radial nach außen zu verformen und, um durch Entfaltung den Wulst (100) zu bilden.

4. Vorrichtung nach einem beliebigen der vorherigen Ansprüche, **dadurch gekennzeichnet, dass** das rohrförmiges Endstück (50) zylindrisch und auf das proximale Gewindeende (40a) der Zugstange (40) angeschraubt ist.

5. Vorrichtung nach Anspruch 1, **dadurch gekennzeichnet, dass** die Hülle (30) eine polygonförmige (31 a) Innenaxialbohrung, z.B. sechskantig, aufweist, die geeignet ist, um mit einer entsprechende polygonale Form (57) zusammenzuwirken, die auf einen äußeren distalen Abschnitt (50b) des rohrförmiges Endstück (50) derart angeordnet ist, dass dieses letzte relativ zu der genannten Hülle (30) verdrehgesichert ist.

6. Vorrichtung nach einem der Ansprüche 4 oder 5, **dadurch gekennzeichnet, dass** die Hülle (30) einen äußeren Durchmesser Df, der im Wesentlichen gleich dem äußeren Durchmesser De1 des rohrförmigen Endstücks (50) aufweist.

7. Vorrichtung nach einem beliebigen der Ansprüche 4 bis 6, **dadurch gekennzeichnet, dass** die Hülle (30) in einem überwiegenden Teil seiner Länge einen äußeren Durchmesser Df aufweist, der geeignet ist, um mit einem im Lagerring (20) angeordneten minimalen Einbauspiel innerhalb einer kreisförmigen Öffnung (24) zu gleiten.

8. Vorrichtung nach einem beliebigen der Ansprüche 6 bis 7, **dadurch gekennzeichnet, dass** die Hülle (30) über der Abschnitt des Durchmessers Df, in die Richtung seines distalen Ende (30b) mit einer Schulter (34) versehen ist, um auf die innere Endfläche (25) des Ringes (20) gestützt zu werden, wobei die genannte Schulter (34) selbst von mehreren radialen Öffnungen (35) durchlocht ist, die ermöglichen eine Verriegelung in Translation (60) der Hülle (30) relativ zu der Zugstange (40) zu logieren.

9. Vorrichtung nach Anspruch 8, **dadurch, gekennzeichnet, dass** die Verriegelung in Translation (60) Kugeln (62) aufweist, wobei diese Kugeln (62) mit einer im Zugstange (40) erstellte Ringnut (44) zusammenwirken und, wobei sie einen gleichen Durchmesser haben wie der äußeren Durchmesser Df3 der Hülle (30), der im Bereich seines distalen Ende gemessen ist und ungefähr einmal vom Durchmesser der Kugeln (62) derart herabgesetzt, dass die Kugeln sich im Ringnut (44) einziehen können ohne den genannten Durchmesser Df3 zu überschreiten.

10. Vorrichtung nach Anspruch 8, **dadurch gekennzeichnet, dass** die Verriegelung in Translation (60) aus einem an die Hülle (30) verbundenen geschlitzten Ring (162) besteht und wobei sie mehrere durch Schlitzen (164) getrennte Segmente (163) aufweist, so dass radial elastische Keilen gebildet werden, deren Enden (165) Pseudo-Torusförmigen radialen Vorsprünge aufweisen, die sich in die Ringnut (44) zurückziehen können.

11. Vorrichtung nach Anspruch 9 oder 10, **dadurch gekennzeichnet, dass** die Ringnut (44) an seinen distalen Rand eine Keilschräge (47) zum Führen der Radial-Regung der Kugeln (62) oder Enden (165) des geschlitzten Ringes (162) während deren Auftritt/Abtritt in die genannte Nut (44) unter der Wirkung der axialen Bewegung der Zugstange (40), aufweist.

12. Vorrichtung nach einem beliebigen der vorherigen Ansprüche, **dadurch gekennzeichnet, dass** das rohrförmige Endstück (50) an sein offenes Ende (50b) eine äußere Fase (51), um mit einer entsprechende konische Fase (36) zusammenzuwirken, die an das proximale Ende (30a) der Hülle (30) angeordnet ist, aufweist.

13. Vorrichtung nach einem beliebigen der vorherigen Ansprüche, **dadurch gekennzeichnet, dass** das rohrförmige Endstück (50) ein geschlossenes proximalen Ende (50a) und ein Innengewinde (52) aufweist, das bestimmt ist mit einem im Bereich des proximalen Endes (40a) der Zugstange (40) angefertigten Außengewinde (41) zusammenzuwirken.

14. Vorrichtung nach einem beliebigen der vorherigen Ansprüche, **dadurch gekennzeichnet, dass** sie zusätzlich einen am distalen Ende (40b) der Zugstange (40), um diese axial zu verschieben, insbesondere während der Bildung des Radialwulsts (100) eingebauten Schraubmitnehmer (70), aufweist.

15. Vorrichtung nach Anspruch 14, **dadurch gekennzeichnet, dass** der Mitnehmer (70) aus einem durchgehend gelöcherten hohlzylindrischen Teil einer axialen Öffnung (71), die an ein proximales Ende (71 a) mit einer Innengewinde (72) vorgesehen ist, die dazu bestimmt ist mit einer äußeren Gewinde (46) der Zugstange (40) zusammenzuwirken, besteht.

16. Vorrichtung nach Anspruch 15, **dadurch gekennzeichnet, dass** die axiale Öffnung (71) des Mitnehmers (70) ebenfalls eine innere Schulter (73) mit einem Durchmesser höher als der Durchmesser der Gewinde (72), so dass sie als Anlagefläche für eine Arretierschraube (90), die in eine innere Gewinde-Öffnung (47), die im Bereich des distalen Ende (70b) der Zugstange (40) gebunden ist, dient.

17. Vorrichtung nach Anspruch 16, **dadurch gekennzeichnet, dass** die axiale Öffnung (71) des Mitnehmers (70) im Bereich seines distalen Ende (71 a) eine Zylinderbohrung (74) mit einem inneren Durchmesser höher als der Durchmesser der Innengewinde (72) derart bildet, dass die Arretierschraube (90) durch dieses Gehäuse eingeführt werden kann.

18. Vorrichtung nach einem beliebigen der vorherigen Ansprüche, **dadurch gekennzeichnet, dass** der Hohlkörper (10) im Bereich seines proximalen Ende (10a) eine Außengewinde (12), die mit einer innere Gewinde (22) des Lagerrings (20) zusammenwirkt, aufweist.

19. Vorrichtung nach einem beliebigen der vorherigen Ansprüche, **dadurch gekennzeichnet, dass** der Hohlkörper (10) nahe seinem proximalen Ende (10a) eine Innenausnehmung (11) mit einer abstrahlenden Grundplatte (11a), aufweist.

20. Vorrichtung nach einem beliebigen der Ansprüche 1 bis 18, **dadurch gekennzeichnet, dass** der Hohlkörper (10) nahe seinem proximalen Ende (10a) eine zylindrische Innenausnehmung (11) mit einer abstrahlenden Grundplatte (11a) aufweist und für die Aufnahme eines abnehmbaren und austauschbaren Verschleißringes (11 b) mit einer abstrahlenden Grundplatte (11 a) in der Lage.

21. Vorrichtung nach einem beliebigen der vorherigen Ansprüche, **dadurch gekennzeichnet, dass** sie vom Lagerring (20) getragene Verdichtungsmittein (26), aufweist, z.B. einen Dichtungsring in einer Innenringnut (25) logiert.

22. Vorrichtung nach einem beliebigen der vorherigen Ansprüche, **dadurch gekennzeichnet, dass** sie, im inneren des Hohlkörpers (10), einen komprimierbaren Teil, der als Druckfeder (80) dient, aufweist.

23. Vorrichtung nach Anspruch 22 und nach einem beliebigen der Ansprüche 14 bis 18, **dadurch gekennzeichnet, dass** der komprimierbaren Teil, z.B. Belleville-Scheiben, einerseits an eine Innenschulter (14) des Hohlkörpers (10) und anderseits an das proximale Ende (70a) des Mitnehmers (70) gestützt wird.

24. Vorübergehende Befestigungsvorrichtung zur Vormontage von mindestens zwei vorab koaxial durchlochten (2, 3) Bauteilen (4, 5) und die eine Vorrichtung (1) einsetzt nach einem beliebigen der vorherigen Ansprüche, **dadurch gekennzeichnet, dass** sie die folgende Schritte umfasst:
- Durchführung von Spannmitteln der Bauteilen (4, 5), in Form von einem Radialwulst (100), von den genannten Teilen entfernt, insbesondere Durchlochungen (2, 3),
- dann, der Wulst (100) mit den genannten Teilen in Kontakt bringen.

25. Vorrichtung nach Anspruch 24, **dadurch gekennzeichnet, dass** der Wulst (100) auf ein rohrförmiges Endstück (50), das angepasst ist, um abnehmbar auf einen Zugstange (40) der Vorrichtung (1) angebaut zu werden und von einer mechanisch geschwächte Zone (55) vorgesehen, die sich durch Entfaltung radial verformt, um den genannten Wulst zu bilden, durchgeführt ist.
